# EUROPEAN PATENT SPECIFICATION

(11) **EP 3 267 085 B1**
(45) Date of publication and mention of the grant of the patent: **18.11.2020**
(21) Application number: 17178430.9
(22) Date of filing: 28.06.2017
(51) Int. Cl.: F16L 25/08, F16L 33/22, F24F 13/02

(54) **A CONNECTOR FOR COMPRESSIBLE DUCTING**
VERBINDER FÜR ZUSAMMENDRÜCKBARE LEITUNG
RACCORD DE TUYAUTERIE COMPRESSIBLE

(30) Priority: 05.07.2016 GB 201611725
(43) Date of publication of application: 10.01.2018
(73) Proprietor: NuAire Limited, Caerphilly Mid Glamorgan CF83 1NA (GB)
(72) Inventor: THOMAS, Wendy Lorraine, Caerphilly, Mid Glamorgan CF83 1NA (GB)
(74) Representative: Jones, David Alan

(56) References cited:
- EP-A2- 1 998 096
- DE-A1- 2 038 388
- FR-A1- 2 850 727
- US-B1- 6 641 177

## Description

The present invention relates to ducting connector, and in particular to a single piece connector for compressible ducting.

Heating, ventilation, and air conditioning (HVAC) systems require ventilation ducting to transport the regulated air to the point of use. It is known to provide insulated ventilation ducting for use in HVAC systems where the control of air temperature is an important consideration. Insulation is commonly provided in the form of expanded foam which surrounds a rigid metal or plastic ducting to provide thermal insulation. In a move to reduce the weight and cost of HVAC ducting, ducting sections have more recently been formed entirely from expanded foam or a similar material. Such ducting sections provide the required thermal insulation and low porosity while also being lightweight and relatively inexpensive.

The flexibility and compressibility of foam ducting presents particular problems in joining sections of ducting together. Rigid ducting sections typically use rigid connectors having a fixed configuration. The rigid nature of the ducting enables rigid push fit connections and compressible seals which are not suitable for use as connectors with compressible foam ducting. The compression of the foam ducting material at the interface with a rigid connector may lead to a leakage due to gaps forming between the two components, or the ducting detaching from the connector altogether.

GB2511497 describes a connector for foam ducting including a clamping assembly that secures and clamps around the outer surface of two ducting sections. The ducting sections must first be inserted over a rigid inner tube, and the two-part clamp is then secured about the ducting sections. The ends of the ducting sections are clamped between the outer clamp and the rigid inner tube, which seals the ducting sections against the inner tube.

The inner tube supports the ducting sections and maintains the internal diameter, preventing collapse of the ducting sections as they are compressed by the clamp. The inner support is typically inserted into one end of each ducting section prior to shipping such that at the point of use the user need only insert a second ducting section over the exposed tube. This is undesirable as it increases the manufacturing steps, cost of the component and shipping weight.

Having connected the two ducting sections via the inner tube the user must then apply the separate clamping section to properly seal the ducting sections. However, it would be possible for the user to attempt to seal the ducting sections using less adequate means such as ducting tape, rather than use the separate clamps, which would lead to a compromised connection.

European patent number EP1998096 describes a two part connector having flexible fingers that extend inwardly from an outer wall of a first connector to exert pressure on the outer surface of a flexible conduit to prevent retraction of the conduit from the first connector. A second connector is inserted into the conduit and is locked in position by tabs on an inner wall of the first connector.

FR2850727 provides a connector comprising a tube with hinged tongues provided at its base. The hinged tongues are pivotable to a locked position when a flexible conduit is inserted over the tube of the connector to hold the conduit in position.

It is therefore desirable to provide an improved ducting connector which addresses the above described problems and/or which offers improvements generally.

According to the present invention there is provided a ducting as described in the accompanying claims.

In an embodiment of the invention there is provided a connector for connecting compressible ducting, such as foam ducting. The connector includes an annular inner wall and an outer wall spaced radially outwards of the inner wall. An axially extending annular channel is defined between the inner and outer walls that is configured for receiving the wall of a ducting section. The outer wall includes a main body and at least one locking member movable relative to the main body between an open configuration in which the ducting section is able to be freely inserted into the annular channel and a closed configuration in which the locking member projects into the annular channel to penetrate the ducting section and lock said ducting section within the annular channel.

The term "ducting" refers to any hollow tube or conduit of any cross sectional shape. Similarly, the term "annular" refers to any closed loop form, including but not limited to circular, square or rectangular. The outer wall defines an outer collar and the inner wall defines an inner tube, with the ducting being located around the inner tube and within the collar.

Providing a movable locking member on the outer wall enables the connector to be formed as a single piece component by allowing the ducting sections to be inserted and then locked within the annular channel of the connector without reconfiguration of the walls. In prior art arrangements which include locking elements that bite into the ducting surface, the locking elements are rigid and fixed relative to an outer clamping member. The clamping member must be formed in at least two parts to enable it to be provided around the outer surface of the ducting. It would not be possible to insert the ducting through the clamping members when closed due to the projecting locking elements. The clamping members are also provided in two parts so that they are relatively movable to be able to clamp and constrain the ducting. The clamping elements must also be separate from the inner support tube in such arrangements.

In contrast, the rigid annular outer wall of the claimed invention is single piece and is connected and integrally moulded with the inner wall. The ability to move the locking members to an open configuration in which they do not obstruct the annular channel allows the ducting sections to be inserted without the requirement to reconfigure the outer wall.

The inner wall and outer wall are preferably substantially rigid relative to the compressible ducting and are fixed relative to each other. This enables the spacing between the inner and outer walls defining the width of the annular channel to be fixed to create an interference fit between the annular channel and the ducting. The rigidity of the connector relative to the ducting causes the ducting to compress due to the interference, thereby creating a secure seal.

The annular channel is preferably open at opposing first and second axial ends to allow two ducting sections to be inserted into the annular channel in opposing axial directions.

A radially extending wall preferably interconnects the inner and outer walls and is located axially between the first and second ends. The radially extending wall holds the inner and outer walls in the fixed spaced relationship and supports the inner wall within the connector. The inner wall defines an inner support tube for supporting the inner wall of the ducting.

The radially extending wall extends between the inner and outer wall around the entire circumference of the inner wall and is preferably located substantially centrally along the length of the inner and outer wall separating the annular channel into first and second channel sections open to the first and second ends respectively. The radially extending wall thereby defines a stop member that axially locates and limits insertion of the ducting sections into the connector, as well as fluidly disconnecting the two annular channel sections.

Preferably the inner wall has a greater axial length and axially extends from the radially extending wall a greater distance than the outer wall in both axial directions. This optimises the support provided to the inner wall of the ducting by the inner wall of the connector.

The at least one locking member comprises a hinged tab arranged to pivot upwards from the outer wall in the open configuration. The tab includes at least one locking element projecting from its lower surface arranged to extend into the annular channel when the tab is pivoted to the closed configuration. The locking element may be a spike, spigot, tooth or any other projection suitably shaped to penetrate the surface of the foam ducting.

The hinges are preferably circumferentially extending such that the tabs extend and pivot in the axial direction, moving radially inwardly and outwardly.

The tabs are preferably arranged at the axially outer edges of the outer wall with the hinges being arranged inwardly towards the centre of the outer wall in the axial direction.

The locking tabs are preferably substantially co-planar with the outer wall in the closed configuration, such that the outer wall forms a substantially continuous outer collar with the locking tabs closed.

The locking elements preferably comprises one or more teeth. The teeth preferably have a substantially triangular wedge shaped configuration. The teeth include an axially inclined forward surface tapering away from the inner surface of the locking tab in the direction of the hinge, and a rear surface that is substantially perpendicular or is arranged at an angle of less than 90 degrees to the inner surface of the tab.

At least one locking member is provided that is arranged to extend into the first channel section and at least one other locking element is provided that is arranged to extend into the second channel section. This ensures that at least one locking member is able to lock the first annular channel section and at least one other is able to lock the second annular channel section. The locking elements extend in opposing directions having hinges that face each other and distal ends that extends away from each other.

The locking tabs associated with the first and second channel sections may be regularly arranged around the circumference of the outer wall in an alternating manner, to ensure that the ducting sections are evenly secured around their circumference.

The tabs are preferably integrally formed with the outer wall and the hinge comprises a living hinge.

The tabs may each include at least one connector element arranged to prevent release of the locking tab when it has been pivoted to the closed configuration. The connector element is a projection forming a catch, and preferably one connector projects from each side edge of the tabs.

The at least one connector element is a snap fit connector projecting from a side of the tab, and the outer wall includes a corresponding recess arranged to receive the connector in the closed configuration. A pair of arms extend upwardly from the outer wall and include circumferentially facing projections beneath which the connectors of the tab are received in a snap fit manner with the tabs are closed.

The connector is a preferably a single piece integrally moulded connector. This advantageously requires an installer to select and apply only a single component during installation. The push fit manner of the ducting insertion, and the snap fit locking tabs also simplify the fitting process.

The present invention will now be described by way of example only with reference to the following illustrative figures in which:
Figure 1 shows a connector according to an embodiment of the present invention;
Figure 2 is a section view of part of a connector according to an embodiment of the present invention with two ducting sections secured therein;
Figure 3 is a close up view of a locking tab of a connector according to an embodiment of the present invention;
Figure 4 is a further close up view of a locking tab of a connector according to an embodiment of the present invention; and
Figure 5 shows a connector according to an embodiment of the present invention fitted to a ducting section.

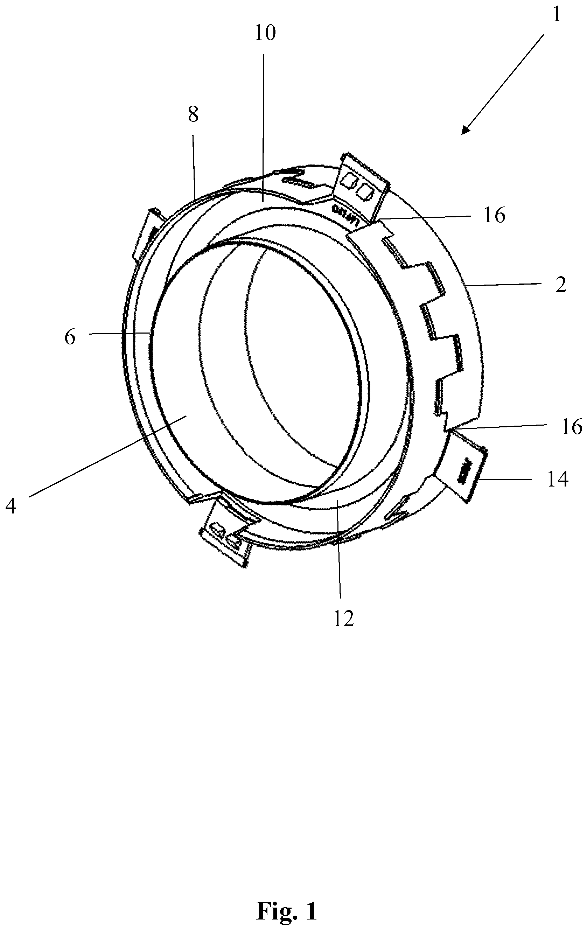

Referring to Figure 1 there is provided a one-piece ducting connector 1. The connector 1 has an annular body 2 having a ducting channel 4 defined therethrough. In the embodiment shown in the Figure 1 the connector is circular. However, the term 'annular' refers to any body shape forming a continuous loop, and may include rectangular, square or any other suitable cross sectional forms.

The body 2 includes an inner wall 6 and an outer wall 8. The inner wall 6 is spaced radially inwards from the outer wall 8. The inner wall 6 and outer wall 8 are concentric with the outer wall 8 being equally spaced from the inner wall 6 around its entire circumference. A flanged section plate 10 forms a connecting wall that extends radially between the outer surface of the inner wall 6 and the inner surface of the outer wall 8. The flanged section 10 connects the inner wall 6 and outer wall 8 and spans the gap there between. The flange section 10 is located centrally along the length of the inner wall 6 and outer wall 8. The spacing between the inner wall 6 and outer wall 8 defines a channel 12 for receiving a ducting section. The flanged section 10 acts as an abutment stop to axially locate the end of the ducting within the connector 1. A plurality of locking tabs 14 are located around the outer wall 8 along the centre line 16 of the outer wall 8 as will be described in further detail below.

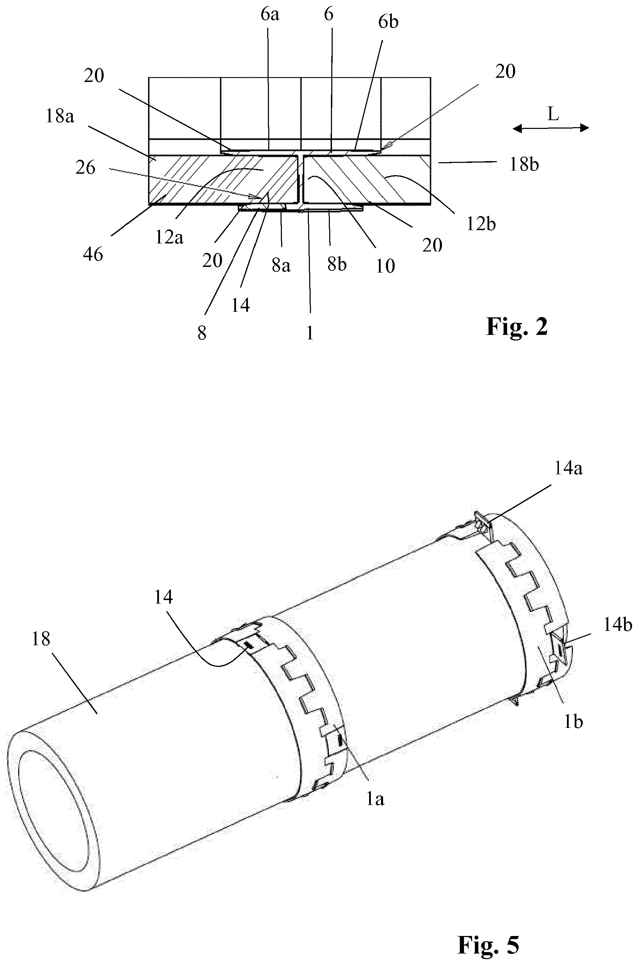

Figure 2 shows a cross-sectional view through the connector 1. The inner wall 6 and outer wall 8 are parallel to each other in the axial direction L. The flanged section 10 is arranged perpendicular to the inner wall 6 and outer wall 8 and extends radially in a direction orthogonal to the axial direction L. The inner wall 6 extends away from the flange section 10 in both axial directions defining a first wall section 6a and a second wall section 6b. The wall sections 6a,6b have the same length. Similarly the outer wall 8 extends away from the flange section 10 in opposing axial directions to define outer wall section 8a and outer wall section 8b. Outer wall section 8a and outer wall section 8b are the same length. The length of the inner wall sections 6a,6b are greater than the length of the outer wall sections 8a,8b to provide greater support for the internal surface of the ducting sections 18.

A first channel section 12a is defined between the inner wall section 6a and outer wall section 8a and a second channel 12b is defined between the inner wall section 6b and the outer wall section 8b on the opposing side of the flange section 10. The ducting sections 18,18b are inserted into the channels 12a,12b respectively in opposing axial directions until they abut against the flange section 10. The radial spacing between the inner wall 6 and outer wall 8 is selected to provide an interference fit between the ducting sections 18 and the channels 12 such that the walls of the ducting sections 18 are radially compressed as they are pushed into the channels 12. To facilitate insertion the channels 12 & 12b include tapered leading edges 20 at the distal end of the inner surfaces of the inner wall 6 and outer wall 8.

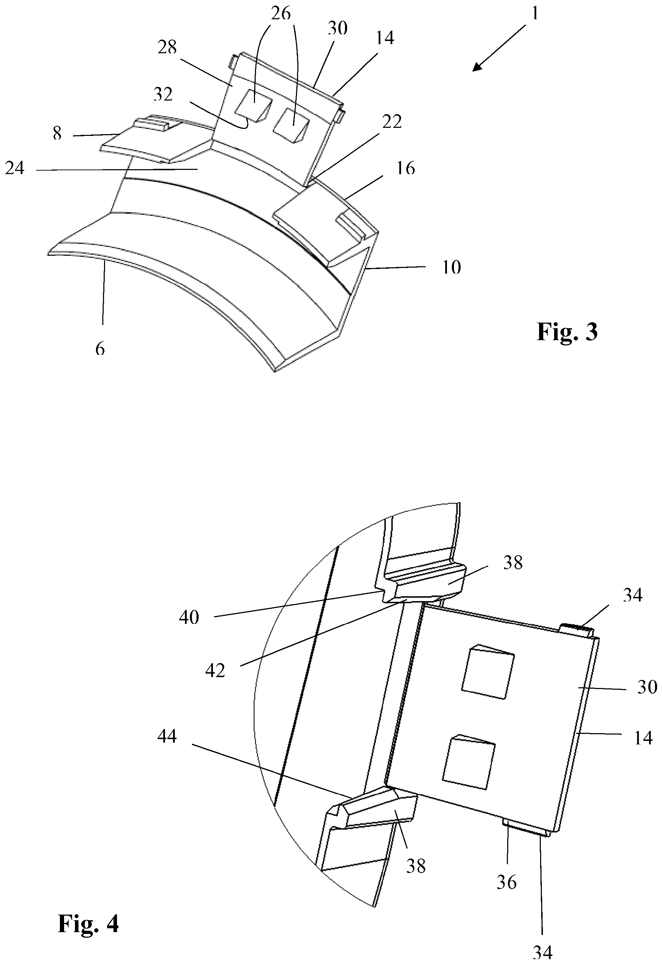

Locking tabs 14 are provided in the outer wall 8 to lock the ducting sections 18 in position once they have been inserted into the channels 12. An enlarged view of one locking tab 14 is shown in Figure 3. The locking tab 14 comprises a hinged flap. In the closed position the locking tab 14 forms a contiguous part of the outer wall 8. The locking tab 14 pivots about a hinge line 22 at its proximal inner edge. The hinge 22 is a living hinge formed by a linear region of reduced material thickness. The line of the hinge 22 is parallel and spaced from the centre line 16 of the outer wall 8. With the locking tab 14 in the raised position as shown in Figure 3, a cut away void 24 is exposed in the outer wall 8 corresponding to the shape of the locking tab 14. A pair of locking teeth 26 are formed on the inner surface 28 of the locking tab 14.

The locking teeth 26 have a tapered, wedge shaped form. The locking teeth 26 taper outwardly away from the lower surface 28 of the tab 14, in the direction away from the distal end 30 towards the proximal end 22 defined by the hinge line. The rear face 32 of each tooth 26 is arranged substantially perpendicular to the lower surface 28 of the locking tab 14. The teeth 26 are arranged on the lower surface 28 such that in the closed position the direction of taper is arranged in the axial direction with the teeth 26 tapering outwardly in the direction of the flange section 10.

As shown in Figure 4, a pair of locking lugs 34 project outwardly from the side edges of the locking tab 14. The locking lugs 34 are arranged near the distal end 30 of the locking tab 14. The lower surface 36 of the locking lugs 34 is angled upwardly away from the lower surface 28 of the tab 14 to provide a tapered leading edge to the locking lugs 34. Retaining clips 38 are located either side of the recess 24. The retaining clips 38 project above the outer surface of the outer wall 8. A recess 40 is formed on the lower surface if the retaining clips 38 and the upper surface of the retaining clips 38 include a tapered leading edge 42 tapering downwardly towards the recess 24. The locking lugs 34 project outwardly from the side edges of the locking tab 14 to a greater width that the width of the recess 24 as defined by the inner edges of the retaining clips 38.

As the locking tab 14 pivots downwardly to the closed position the tapered lower surface 36 of the locking lugs 34 engaged the tapered leading edges 42 of the retaining clips 38. The tab 14 and/or the locking lugs 34 are configured to flex to narrow the overall width of the locking tab 14 and allow the tab 14 to pivot to the fully closed position. As the locking lugs 34 pass the lower edge of the projecting leading edges 44 of the retaining clips 48 the locking lugs 34 are received into the channels 40. The locking tab 14 and locking lugs 34 unflex and snap back into position and the upper surfaces of the locking lugs 34 engage the lower surfaces of the projecting parts 44 of the retaining clips 38 to retain the locking tab 14 in the closed position. The locking lugs 34 and retaining clips 38 therefore combine to provide a snap lock feature.

Referring again to Figure 2, when the locking tabs 14 are moved to the closed position, with the ducting sections 18 received within the channels 12 the teeth 26 penetrate and bite into the outer surface 46 of the ducting sections 18. In this way, with the locking tab 14 secured in the closed position by the locking lugs 34 and retaining clips 38 the teeth 26 are held in the embedded position within the ducting sections 18. The angle of the rear edge 32 of the teeth 26 assists in preventing the ducting sections 18 from being removed from the channels 12. As such, with a plurality of locking tabs 14 closed around the circumference of the ducting section 18 the ducting section 18 is both sealed and locked within the channel 12 of the connector 1.

As shown in Figure 5 the locking tabs 14 are arranged in a staggered arrangement around the circumference of the connector 1. A first plurality of locking tabs 14a are arranged on a first side of the connector 1 lengthwise to connect to a first ducting section 18a, and a second plurality of tabs 14b hinge in the opposing direction on the opposing side of the connector 1 to secure to a second ducting section 18b. The hinge lines 22 of the locking tabs 14a,14b are spaced slightly on opposing sides of the centre line 16 of the outer wall 8. In the arrangement of Figure 5 it can be seen that the tabs 14 of the first connector 1a are in the locked position and the tabs 14 of the second connector 1b are pivoted to the open position.

The connector 1 therefore includes an integrated inner support tube defined by the inner wall 6, a clamping and sealing section defined by the channels 12, and locking arrangement in the form of the locking tabs 14. The connectors 1 may therefore be provided as a single integral component that do not require pre-fitting to the ducting sections 18. Furthermore the ducting sections 18 do not require inner support tubes to be fitted prior to shipping. In addition, the integrated nature of the outer wall 8 and the locking tabs 14 mean that a fitter must use the designated clamping and locking arrangement of the connector 1 and cannot select to use an alternative, inferior securing means such as ducting tape. Fitting of the connector 1 is therefore significantly simplified by the reduced number of parts and the integrated nature of the locking tabs 14, and the integrated nature of the single piece connector 1 also means that the connectors 1 are installed in accordance with fitting directions.

## Claims

1. A connector for connecting compressible ducting comprising:
an annular inner wall (6);
an outer wall (8) spaced radially outwards of the inner wall (6); and
an axially extending annular channel (12) defined between the inner and outer walls (6, 8) for receiving a ducting section;
wherein the outer wall (8) includes a main body and at least one hinged locking tab (14);
**characterised in that**:
the at least one hinged locking tab (14) has at least one locking element (26) projecting from its inner surface, the at least one hinged locking tab (14) being pivotable relative to the main body between an open configuration in which a ducting section is able to be freely inserted into the annular channel (12) and a closed configuration in which the locking element (26) projects into the annular channel (12) to penetrate the ducting section and lock said ducting section within the annular channel (12).

2. A connector according to claim 1 wherein the annular channel (12) is open at opposing first and second axial ends to allow two ducting sections to be inserted into the annular channel (12) in opposing axial directions.

3. A connector according to claim 2 further comprising a radially extending wall (10) interconnecting the inner and outer walls (6, 8) and located axially between the first and second ends.

4. A connector according to claim 3 wherein the radially extending wall (10) extends between the inner and outer walls (6, 8) around the entire circumference of the inner wall (6).

5. A connector according to any preceding claim wherein the at least one hinged locking tab (14) is arranged to pivot upwards from the outer wall (8) in the open configuration.

6. A connector according to claim 5 wherein the at least one hinged locking tab (14) is substantially co-planar with the outer wall (8) in the closed configuration.

7. A connector according to claim 5 or 6 wherein the at least one locking element (26) comprises one or more teeth.

8. A connector according to claim 7 wherein the one or more teeth (26) have a substantially wedge shaped configuration.

9. A connector according to any one of claims 5 to 8 wherein the at least one hinged locking tab (14) is integrally formed with the outer wall (8) and the hinge comprises a living hinge.

10. A connector according to any one of claims 5 to 9 wherein the at least one hinged locking tab (14) includes at least one connector element arranged to prevent release of the at least one hinged locking tab (14) when it has been pivoted to the closed configuration.

11. A connector according to claim 10 wherein the at least one connector element is a snap fit connector projecting from a side of the at least one hinged locking tab (14), and the outer wall (8) includes a corresponding recess arranged to receive the connector in the closed configuration.

12. A connector according to any claim wherein the connector is a single piece integrally moulded connector.

13. A connector according to any one of claims 3 or 4 wherein the radially extending wall (10) is located substantially centrally along the length of the inner and outer wall (6, 8) separating the annular channel (12) into first and second channel sections open to the first and second ends respectively, and wherein at least one locking element (26) is arranged to extend into the first channel section and at least one locking element (26) is arranged to extend into the second channel section.

14. A connector according to claim 13 wherein the hinged locking tabs (14) associated with the first and second channel sections are regularly arranged around the circumference of the outer (8) wall in an alternating manner.

## Patentansprüche

1. Verbinder zum Verbinden einer zusammendrückbaren Leitung, Folgendes umfassend:
eine ringförmige Innenwand (6);
eine Außenwand (8), die radial nach außen von der Innenwand (6) beabstandet ist; und
einen sich axial erstreckenden, ringförmigen Kanal (12), der zwischen der Innen- und Außenwand (6, 8) zur Aufnahme eines Leitungsabschnitts definiert ist;
wobei die Außenwand (8) einen Hauptkörper und mindestens eine gelenkige Verriegelungslasche (14) umfasst;
**dadurch gekennzeichnet, dass**:
die mindestens eine gelenkige Verriegelungslasche (14) mindestens ein Verriegelungselement (26) aufweist, das von ihrer Innenfläche vorsteht, wobei die mindestens eine gelenkige Verriegelungslasche (14) in Bezug zum Hauptkörper zwischen einer offenen Konfiguration, in der ein Leitungsabschnitt frei in den ringförmigen Kanal (12) eingesetzt werden kann, und einer geschlossenen Konfiguration, in der das Verriegelungselement (26) in den ringförmigen Kanal (12) vorsteht, um den Leitungsabschnitt zu durchdringen und den Leitungsabschnitt innerhalb des ringförmigen Kanals (12) zu verriegeln, verschwenkbar ist.

2. Verbinder nach Anspruch 1, wobei der ringförmige Kanal (12) an einem entgegengesetzten ersten und zweiten axialen Ende offen ist, um zuzulassen, dass zwei Leitungsabschnitte in entgegengesetzte Axialrichtungen in den ringförmigen Kanal (12) eingesetzt werden können.

3. Verbinder nach Anspruch 2, ferner eine sich radial erstreckende Wand (10) umfassend, die die Innen- und Außenwand (6, 8) miteinander verbindet und sich axial zwischen dem ersten und zweiten Ende befindet.

4. Verbinder nach Anspruch 3, wobei sich die radial erstreckende Wand (10) zwischen der Innen- und Außenwand (6, 8) um den gesamten Umfang der Innenwand (6) erstreckt.

5. Verbinder nach einem der vorstehenden Ansprüche, wobei die mindestens eine gelenkige Verriegelungslasche (14) dazu angeordnet ist, sich in der geöffneten Konfiguration von der Außenwand (8) nach oben zu verschwenken.

6. Verbinder nach Anspruch 5, wobei die mindestens eine gelenkige Verriegelungslasche (14) in der geschlossenen Konfiguration im Wesentlichen komplanar mit der Außenwand (8) ist.

7. Verbinder nach Anspruch 5 oder 6, wobei das mindestens eine Verriegelungselement (26) einen oder mehrere Zähne umfasst.

8. Verbinder nach Anspruch 7, wobei der eine oder die mehreren Zähne (26) eine im Wesentlichen keilförmige Konfiguration aufweisen.

9. Verbinder nach einem der Ansprüche 5 bis 8, wobei die mindestens eine gelenkige Verriegelungslasche (14) mit der Außenwand (8) einstückig ausgebildet ist und das Scharnier ein Filmscharnier umfasst.

10. Verbinder nach einem der Ansprüche 5 bis 9, wobei die mindestens eine gelenkige Verriegelungslasche (14) mindestens ein Verbinderelement umfasst, das dazu angeordnet ist, zu verhindern, dass sich die mindestens eine gelenkige Verriegelungslasche (14) löst, wenn sie in die geschlossenen Konfiguration verschwenkt wurde.

11. Verbinder nach Anspruch 10, wobei das mindestens eine Verbinderelement ein Einrastverbinder ist, der von einer Seite der mindestens einen gelenkigen Verriegelungslasche (14) vorsteht, und die Außenwand (8) eine zugehörige Aussparung umfasst, die dazu angeordnet ist, den Verbinder in der geschlossenen Konfiguration aufzunehmen.

12. Verbinder nach einem der vorstehenden Ansprüche, wobei der Verbinder ein einstückiger, integral geformter Verbinder ist.

13. Verbinder nach einem der Ansprüche 3 oder 4, wobei sich die radial erstreckende Wand (10) im Wesentlichen mittig entlang der Länge der Innen- und Außenwand (6, 8) befindet und den ringförmigen Kanal (12) in einen ersten und zweiten Kanalabschnitt teilt, die zum ersten bzw. zweiten Ende geöffnet sind, und wobei mindestens ein Verriegelungselement (26) dazu angeordnet ist, sich in den ersten Kanalabschnitt zu erstrecken, und mindestens ein Verriegelungselement (26) dazu angeordnet ist, sich in den zweiten Kanalabschnitt zu erstrecken.

14. Verbinder nach Anspruch 13, wobei die gelenkigen Verriegelungslaschen (14), die dem ersten und zweiten Kanalabschnitt zugeordnet sind, regelmäßig, abwechselnd um den Umfang der Außenwand (8) angeordnet sind.

## Revendications

1. Connecteur pour connecter une tuyauterie compressible, comprenant :
une paroi interne annulaire (6) ;
une paroi externe (8) espacée radialement vers l'extérieur de la paroi interne (6) ; et
un canal annulaire s'étendant axialement (12) défini entre les parois interne et externe (6, 8) destiné à recevoir une section de tuyauterie ;
la paroi externe (8) incluant un corps principal et au moins un onglet de verrouillage à charnière (14) ;
**caractérisé en ce que** :
ledit au moins un onglet de verrouillage à charnière (14) a au moins un élément de verrouillage (26) qui se projette à partir de sa surface interne, ledit au moins un onglet de verrouillage à charnière (14) étant pivotable par rapport au corps principal entre une configuration ouverte dans laquelle une section de tuyauterie peut être insérée librement dans le canal annulaire (12) et une configuration fermée dans laquelle l'élément de verrouillage (26) se projette dans le canal annulaire (12) afin de pénétrer dans la section de tuyauterie et verrouiller ladite section de tuyauterie à l'intérieur du canal annulaire (12).

2. Connecteur selon la revendication 1, dans lequel le canal annulaire (12) est ouvert à des première et deuxième extrémités axiales opposées afin de permettre à deux sections de tuyauterie d'être insérées dans le canal annulaire (12) dans des directions axiales opposées.

3. Connecteur selon la revendication 2, comprenant en outre une paroi s'étendant radialement (10) qui connecte les parois interne et externe (6, 8) et est située axialement entre les première et deuxième extrémités.

4. Connecteur selon la revendication 3, dans lequel la paroi s'étendant radialement (10) s'étend entre les parois interne et externe (6, 8) autour de la circonférence entière de la paroi interne (6).

5. Connecteur selon l'une quelconque des revendications précédentes, dans lequel ledit au moins un onglet de verrouillage à charnière (14) est agencé pour pivoter vers le haut à partir de la paroi externe (8) dans la configuration ouverte.

6. Connecteur selon la revendication 5, dans lequel ledit au moins un onglet de verrouillage à charnière (14) est essentiellement coplanaire avec la paroi externe (8) dans la configuration fermée.

7. Connecteur selon la revendication 5 ou 6, dans lequel ledit au moins un élément de verrouillage (26) comprend une ou plusieurs dents.

8. Connecteur selon la revendication 7, dans lequel la ou les dents (26) ont une configuration essentiellement en forme de coin.

9. Connecteur selon l'une quelconque des revendications 5 à 8, dans lequel ledit au moins un onglet de verrouillage à charnière (14) est formé d'un seul tenant avec la paroi externe (8) et la charnière comprend une charnière vivante.

10. Connecteur selon l'une quelconque des revendications 5 à 9, dans lequel ledit au moins un onglet de verrouillage à charnière (14) inclut au moins un élément connecteur agencé pour empêcher un relâchement dudit au moins un onglet de verrouillage à charnière (14) lorsqu'il a été pivoté en la configuration fermée.

11. Connecteur selon la revendication 10, dans lequel ledit au moins un élément connecteur est un connecteur à encliquetage se projetant à partir d'un côté dudit au moins un onglet de verrouillage à charnière (14), et la paroi externe (8) inclut un retrait correspondant agencé pour recevoir le connecteur dans la configuration fermée.

12. Connecteur selon l'une quelconque des revendications précédentes, dans lequel le connecteur est un connecteur moulé d'un seul tenant en une seule pièce.

13. Connecteur selon l'une quelconque des revendications 3 ou 4, dans lequel la paroi s'étendant radialement (10) est située essentiellement centralement le long de la longueur de la paroi interne et externe (6, 8), séparant le canal annulaire (12) en des première et deuxième sections de canal ouvertes vers les première et deuxième extrémités respectivement, et dans lequel au moins un élément de verrouillage (26) est agencé pour s'étendre dans la première section de canal et au moins un élément de verrouillage (26) est agencé pour s'étendre dans la deuxième section de canal.

14. Connecteur selon la revendication 13, dans lequel les onglets de verrouillage à charnière (14) associés avec les première et deuxième sections de canal sont agencés régulièrement autour de la circonférence de la paroi externe (8) de manière alternée.
